# EUROPEAN PATENT SPECIFICATION

(11) **EP 1 278 801 B1**
(45) Date of publication and mention of the grant of the patent: **25.01.2006**
(21) Application number: 01931172.9
(22) Date of filing: 03.05.2001
(51) Int. Cl.: C08L 63/08

(54) **FORMULATION FOR STRIPPABLE ADHESIVE AND COATING FILMS**
FORMULIERUNG FÜR ABZIEHBARE KLEBSTOFF- UND BESCHICHTUNGSFOLIE
FORMULATION DESTINEE A DES ADHESIFS PELABLES ET FILMS DE REVETEMENT

(30) Priority: 03.05.2000 US 201507 P
(43) Date of publication of application: 29.01.2003
(73) Proprietor: KRATON Polymers Research B.V., 1031 CM Amsterdam (NL)
(72) Inventor: ERICKSON, James, R., Katy, TX 77450 (US)
(74) Representative: Schmitz, Jean-Marie
(86) International application number: PCT/US2001/040660
(87) International publication number: WO 2001/083634

(56) References cited:
- EP-A- 0 889 088
- WO-A-99/45063
- US-A- 5 837 749
- DATABASE WPI Section Ch, Week 200107 Derwent Publications Ltd., London, GB; Class A12, AN 2001-053843 XP002183175 & JP 2000 290475 A (DAICEL CHEM IND LTD), 17 October 2000 (2000-10-17)

## Description

### Field of the Invention

This invention relates to improved protective and decorative strippable adhesive and coating films. More particularly, the invention relates to a novel formulation for forming strippable films by curing the formulation by irradiating it with UV light.

### Background of the Invention

Protective and decorative strippable adhesive and coating films are well known and are highly useful for application to home and store windows and the windows and panels of automobiles to serve as either a protective or decorative covering or both. Strippable adhesives and coatings are used to protect parts during manufacturing operations in the aerospace industry. After they have provided the protection from a particular environment, they must strip off easily, preferably in large pieces. This type of film is applied in sheet form, cured, and printed, and it is sometimes preferred that it is capable of being wound upon itself without the necessity of a release coating or a release liner. Other times it is desirable to apply it directly to the part, cure it in place, and strip it off after it has served its purpose.

U.S. Patent 5,286,781 describes a pressure sensitive adhesive composition and tape or sheet made therefrom which is comprised of a block copolymer of a vinyl aromatic hydrocarbon and a conjugated diene and a particular polyolefin. Also described therein are previous protective films made with such block copolymers and several other similar polymers.

Formulations based on the above block copolymers are used commercially and have the advantage that they exhibit elastic properties at room temperature. However, they are limited in their susceptibility to high service temperatures, i.e., above about 70°C. At such temperatures, the films weaken cohesively.

Adhesive films based on UV cured epoxidized polydiene polymers are described in U.S. patents 5,776,998 and 5,837,749. While adhesive and coating films made from these materials are highly useful for high performance pressure sensitive adhesives, these formulations do not work very well for strippable adhesives and coatings. Such films generally have poor tensile properties. They tear or break upon only a small induced elongation. This limits the quality of the strippable coatings and adhesive films because they break too easily and this prevents easy removability. The present invention eliminates this problem.

### Summary of the Invention

This invention relates to curable strippable adhesive and coating films. The adhesive and coating film composition comprises from 10 to 90 percent by weight (wt%) of a crosslinkable epoxidized diene polymer, from 0 to 70 percent by weight of a diene mono-ol polymer, with the condition that the mono-ol polymer not exceed three times the weight of the epoxidized polymer, from 5 to 50 percent by weight of a homogeneous linear or substantially linear interpolymer of ethylene and at least one C₃-C₂₀ alpha olefin having a resultant polymer density from 0.85 to 0.89, preferably from 0.86 to 0.88 grams per cubic centimeter, from 0 to 65% percent by weight of a tackifying resin, and from 0.01 to 3 percent by weight of a photoinitiator.

The preferred epoxidized diene polymer of the present invention is an epoxidized monohydroxylated block copolymer of at least two conjugated dienes, preferably isoprene and butadiene, wherein the isoprene block substantially contains the epoxidation, the butadiene block is hydrogenated, and the hydroxyl group is attached at the end of the butadiene block. It is preferred that the polydiene mono-ol polymer have a number average or hydroxyl equivalent molecular weight of 2,000 to 30,000 and these polymers are preferably hydrogenated polybutadiene with a terminal OH group. The preferred mono-ol polymer, and tackifying resins are hydrogenated.

### Detailed Description of the Invention

Polymers of this invention containing ethylenic unsaturation can be prepared by polymerizing one or more olefins, particularly diolefins, by themselves or with one or more alkenyl aromatic hydrocarbon monomers. The polymers can be random, tapered, block or a combination of these, as well as linear, star or radial.

In general, when anionic solution polymerization techniques are used, polymers of conjugated diolefins, optionally with vinyl aromatic hydrocarbons, are prepared by contacting the monomer or monomers to be polymerized simultaneously or sequentially with an anionic polymerization initiator such as group IA metals, preferably lithium, their alkyls, amides, naphthalides, biphenyls or anthracenyl derivatives.

The epoxidized polydienes and polydiene mono-ols are synthesized by anionic polymerization of conjugated diene hydrocarbons with these lithium initiators. This process is well known as described in U.S. Patents Nos. 4,039,593 and Re. 27,145 which descriptions are incorporated herein by reference. Polymerization commences with a monolithium initiator which builds a living polymer backbone at each lithium site. Typically, such polymers are capped by termination with ethylene oxide to provide a terminal hydroxyl group.

Conjugated diolefins which may be polymerized anionically include those conjugated diolefins containing from 4 to 24 carbon atoms such as 1,3-butadiene, isoprene, piperylene, methylpentadiene, 2-phenyl-1,3-butadiene, 3,4-dimethyl-1,3-hexadiene, 4,5-diethyl-1,3-octadiene and the like. Isoprene and butadiene are the preferred conjugated diene monomers for use in the present invention because of their low cost and ready availability.

The most preferred monohydroxylated polydiene polymers of the present invention have the general structural formula:

(I) (HO)ₓ-A-S_{z}-B-(OH)_{y}

wherein A and B are polymer blocks which may be homopolymer blocks of conjugated diolefin monomers, copolymer blocks of conjugated diolefin monomers, or copolymer blocks of diolefin monomers and monoalkenyl aromatic hydrocarbon monomers. These polymers may contain up to 60% by weight of at least one vinyl aromatic hydrocarbon, preferably styrene. Generally, it is preferred that the A blocks should have a greater concentration of more highly substituted aliphatic double bonds than the B blocks have. Thus, the A blocks have a greater concentration of di-, tri-, or tetra-substituted unsaturation sites (aliphatic double bonds) per unit of block mass than do the B blocks. This produces a polymer wherein the most facile epoxidation occurs in the A blocks. The A blocks have a number average molecular weight of from 100 to 6,000, preferably 500 to 4,000, and most preferably 1,000 to 3,000, and the B blocks have a number average molecular weight of from 1,000 to 15,000, preferably 2,000 to 10,000, and most preferably 3,000 to 6,000. S is a vinyl aromatic hydrocarbon block which may have a number average molecular weight of from 100 to 10,000. x and y are 0 or 1. Either x or y must be 1, but only one at a time can be 1. z is 0 or 1. Either the A or the B block may be capped with a miniblock of polymer, 50 to 1,000 number average molecular weight, of a different composition, to compensate for any initiation, tapering due to unfavorable copolymerization rates, or capping difficulties. These monohydroxylated polydiene polymers may be epoxidized such that they contain from 0.1 to 7.0 milliequivalents (meq) of epoxide functionality (oxirane oxygen) per gram of polymer.

Diblocks falling within the above description are preferred. The overall number average molecular weight of such diblocks may range from 1,500 to 15,000, preferably 3,000 to 7,000. Either of the blocks in the diblock may contain some randomly polymerized vinyl aromatic hydrocarbon as described above. For example, where I represents isoprene, B represents butadiene, S represents styrene, and a slash (/) represents a random copolymer block, the diblocks may have the following structures:
I-B-OH I-B/S-OH I/S-B-OH I-I/B-OH or
B/I-B/S-OH B-B/S-OH I-EB-OH I-EB/S-OH or
I-S/EB-OH I/S-EB-OH HO-I-S/B HO-I-S/EB
   where EB is hydrogenated butadiene, -EB/S-OH means that the hydroxyl source is attached to a styrene repeating unit, and -S/EB-OH signifies that the hydroxyl source is attached to a hydrogenated butadiene repeating unit. This latter case, -S/EB-OH, requires capping of the S/EB "random copolymer" block with a mini EB block to compensate for the tapering tendency of the styrene prior to capping with ethylene oxide. These diblocks are advantageous in that they exhibit lower viscosity and are easier to manufacture than the corresponding triblock polymers. It is preferred that the hydroxyl be attached to the butadiene block because the epoxidation proceeds more favorably with isoprene and there will be a separation between the functionalities on the polymer. However, the hydroxyl may also be attached to the isoprene block if desired. This produces a more surfactant-like molecule with less load bearing capacity. The isoprene blocks may also be hydrogenated.

Certain triblock copolymers are also preferred for use herein. Such triblocks usually include a styrene block or randomly copolymerized styrene to increase the polymers glass transition temperature, compatibility with polar materials, strength, and room temperature viscosity. These triblocks include the following specific structures:
I-EB/S-EB-OH I-B/S-B-OH I-S-EB-OH I-S-B-OH or
I-I/S-I-OH I-S-I-OH B-S-B-OH B-B/S-B-OH or
I-B/S-I-OH I-EB/S-I-OH or
I-B-S-OH I-EB-S-OH HO-I-EB-S

The latter group of polymers specified in the last line above wherein the styrene block is external are represented by the formula

(II) (HO)ₓ-A-B-S-(OH)_{y}

where A, B, S, x, and y are as described above. These polymers and the other triblocks shown above are particularly advantageous for introducing blocks of epoxy functionality into the monohydroxylated polymers at multiple sites.

Epoxidation of the base polymer can be effected by reaction with organic peracids which can be preformed or formed in situ. Suitable preformed peracids include peracetic, performic, and perbenzoic acids. In situ formation may be accomplished by using hydrogen peroxide and a low molecular weight fatty acid such as formic acid. These and other methods are described in more detail in U.S. Patents 5,229,469 and 5,247,026 which are herein incorporated by reference. Alternately, tungsten catalyzed phase transfer epoxidation can be carried out as described in J. Polymer Science, Pt A, 33 1881 (1995) by J. V. Crivello and B. Yang. The amount of epoxidation of these polydiene polymers ranges from about 0.1 to about 7 milliequivalents of oxirane oxygen per gram of polymer, Low levels are desirable to avoid overcure. Above 7 meq/g, the rigidity, crosslink density, cost, difficulty of manufacture, and polarity of the epoxidized are such that polymer does not provide any benefit. The preferred amount of epoxidation is 0.5 to 5 meq/g and the most preferred amount of epoxidation is 1.0 to 3 meq/g. The most preferred amount provides the best balance of rate of UV cure against undesired overcure and better maintains compatibility with a variety of formulating ingredients commonly used with polydiene based adhesives.

The molecular weights of the linear polymers or unassembled linear segments of polymers such as mono-, di-, triblock, etc., arms of star polymers before coupling are conveniently measured by Gel Permeation Chromatography (GPC), where the GPC system has been appropriately calibrated. For anionically polymerized linear polymers, the polymer is essentially monodisperse (weight average molecular weight/number average molecular weight ratio approaches unity), and it is both convenient and adequately descriptive to report the "peak" molecular weight of the narrow molecular weight distribution observed. Usually, the peak value is between the number and the weight average. The peak molecular weight is the molecular weight of the most abundant species shown on the chromatograph. For polydisperse polymers the number average and the weight average molecular weight should be calculated from the chromatograph and used. For materials to be used in the columns of the GPC, styrene-divinylbenzene gels or silica gels are commonly used and give excellent molecular weight results. Tetrahydrofuran is an excellent non-aqueous solvent for polymers of the type described herein. A refractive index detector may be used. For anionic polymers, it is also often convenient to determine the number average molecular weight by end group analysis using NMR.

If desired, these block copolymers can be partially hydrogenated. Hydrogenation may be effected selectively as disclosed in U.S. Patent Reissue 27,145 which is herein incorporated by reference. The hydrogenation of these polymers and copolymers may be carried out by a variety of well established processes including hydrogenation in the presence of such catalysts as Raney Nickel, noble metals such as platinum and the like, soluble transition metal catalysts and titanium catalysts as in U.S. Patent 5,039,755 which is also incorporated by reference. The polymers may have different diene blocks and these diene blocks may be selectively hydrogenated as described in U.S. Patent 5,229,464 which is also herein incorporated by reference. Partially unsaturated hydroxylated polymers are useful for further functionalization to make the epoxidized polymers of this invention. The partial unsaturation preferably is such that 0.1 to 7 miliequivalents (meq) of aliphatic double bonds suitable for epoxidation remain on the polymer. If epoxidation is carried out before hydrogenation, then it is preferred that all remaining aliphatic double bonds be hydrogenated.

It may be advantageous to include in the composition a low molecular weight polydiene mono-ol in order to adjust the tack and peel of the composition. These polymers preferably have a functionality of 0.6 to 1.4, more preferably 0.8 to 1.2, and most preferably from 0.9 to 1.0. Such mono-ols have a number average molecular weight of 2,000 to 30,000 and are preferably hydrogenated polydiene polymers with a terminal OH, such as monohydroxylated hydrogenated polybutadiene or polyisoprene. Preferred mono-ols include those with a number average molecular weight range of 2,000 to 10,000. Self-windable strippable coatings are films that are not attached to support film. These require the use of very little or no mono-ol polymer so that the tack on the exposed surface of the film is minimal. These films can be preformed or sprayed, dipped, or otherwise applied to the object requiring protection. Such strippable coatings can be used for chemical milling. The amount of mono-ol should not be more than 10 percent by weight (wt%) of the entire formulation.

As discussed above, the strippable film composition of the present invention contains from 5 to 50 percent by weight of a homogeneous linear or substantially linear interpolymer of ethylene and a C₃-C₂₀ alpha olefin. At least 5 percent is necessary to obtain the desired improvement in tensile strength over the epoxidized diene polymer alone. If more than 50 percent is used, the high temperature resistance of the composition is insufficient. In this range, the composition has a highly advantageous balance of tensile strength and high temperature resistance.

The compositions of the present invention can also be used produce high performance tape and label pressure sensitive adhesives (PSA) that may not or may not have a stripping requirement. The level of interpolymer used in these formulations is 5 to 20 wt%. The epoxidized polymer is used at 15 to 25 wt% and the mono-ol polymer is used at 15 to 30 wt%. A high level of tackifier resin may be used - 40 to 65 wt%. The interpolymer is generally less expensive than the mono-ol and the epoxidized polymer. Therefore, the interpolymer acts as a replacement for the other two polymers and can lower the raw material cost of the formulation. Further, at 5 to 20 wt% of the formulation, especially at 10 to 20 wt%, the interpolymer provides sufficient elasticity at room to slightly elevated temperatures for the adhesive to remain a solid. Thus, it can be warm/hot sprayed onto colder vertical surfaces and hold or it can be coated and rewound even without being cured by radiation, and cured later. Significantly, it can be packaged and handled as a solid before introduction to the coating equipment. This gives the advantage that it can be handled by production personnel in a manner with which they are familiar, as it will behave much like a typical hot melt adhesive. The application temperature can be as low at 100° to 150°C instead of the typical 170° to 200°C range for known thermoplastic block coplymer adhesives. This is advantageous when the adhesive is applied on thin or heat sensitive substrates.

The homogeneous linear or substantially linear interpolymers of ethylene and a C₃-C₂₀ alpha olefin generally have a density from 0.85 to 0.0.890 g/cm³, preferably 0.86 to 0.88 g/cm³. The preferred melt index for the polymers is 0.3 to 100 dg/min (ASTM D1238). As the density of the interpolymer increases, the lower melt index interpolymers can have more difficulty being used successfully due to incompatiblity.

The term interpolymer is used herein to indicate a copolymer, or a terpolymer, or the like. That is, at least one other comonomer is polymerized with ethylene to make the interpolymer. The homogeneous linear or substantially linear polymer is an ethylene polymer prepared using a constrained geometry or single site metallocene catalyst. By the term homogeneous, it is meant that any comonomer is randomly distributed within a given interpolymer molecule and substantially all of the interpolymer molecules have the same ethylene/comonomer ratio within that interpolymer. The melting peak of homogeneous linear and substantially linear ethylene polymers, as determined by differential scanning calorimetry (DSC), will broaden as the density decreases and/or as the number average molecular weight decreases. However, unlike heterogeneous polymers, when a homogeneous polymer has a melting peak greater than 115°C, such as is the case of polymers having a density greater than 0.940 g/cm³, such polymers typically do not additionally have a distinct lower temperature melting peak. The homogeneous linear or substantial linear ethylene polymers are characterized as having a narrow molecular weight distribution (M_{w}/Mₙ). For the linear and substantially linear ethylene polymers, the M_{w}/Mₙ is preferably from 1.5 to 2.5, preferably from 1.8 to 2.2.

Substantially linear ethylene polymers are homogeneous polymers having long chain branching. The long chain branches have the same comonomer distribution as the polymer backbone and can be as long as about the same length as the length of the polymer backbone. When a substantially linear ethylene polymer is employed in the practice of the invention, such polymer will be characterized as having a polymer backbone substituted with from 0.01 to 3 long chain branches per 1,000 carbons. Methods for determining the amount of long chain branching present, both qualitatively and quantitatively, are known in the art. For qualitative and quantitative methods for determination, see U.S. Patent Nos. 5,272,236 and 5,278,272 which are herein incorporated by reference.

The homogeneous linear or substantially linear ethylene polymer will be an interpolymer of ethylene with at least one alpha olefin. Preferred are interpolymers of ethylene with at least one C₃-C₂₀ alpha olefin (for instance, propylene, isobutylene, 1-butene, 1-pentene, 1-hexene, 4-methyl-1-pentene, and 1-octene) with interpolymers of ethylene with at least one C₄-C₂₀ alpha olefin, particularly at least one C₆-C₈ alpha olefin, being most preferred. When 1-octene is employed as the comonomer, preferably the 1-octene is present in an amount greater than 20 percent by weight in the polymer as measured by NMR in accordance with ASTM D-5017. More preferably, the 1-octene comonomer content is greater than 23 percent by weight.

Homogeneously branched linear ethylene/alpha olefin interpolymers may be prepared by using polymerization processes which provide a homogeneous short chain branching distribution. For instance, see U.S. Patent 3,645,992 which is herein incorporated by reference. In this process, a soluble vanadium catalyst system is used. Others have used so-called single site metallocene catalyst systems to make such polymers. Substantially linear ethylene/alpha olefin interpolymers are available from The Dow Chemical Company and may be prepared in accordance with the techniques described in U.S. Patents 5,272,236 and 5,278,272 which are herein incorporated by reference. For example, commercial grades are available from DuPont Dow Elastomers under the trademark ENGAGE® and from Exxon under the trademark EXACT®.

The formulations of this invention may be cured by cationic means using acid catalysts but are preferably cured by means of ultraviolet or electron beam radiation. Radiation curing utilizing a wide variety of electromagnetic wavelengths is feasible. Either ionizing radiation such as alpha, beta, gamma, X-rays and high energy electrons or non-ionizing radiation such as ultraviolet, visible, infrared, microwave and radio frequency may be used. A complete description of how this irradiation may be accomplished is found in commonly assigned U. S. Patent 5,229,464 which is herein incorporated by reference.

When using radiation it is necessary to employ a photoinitiator to initiate the crosslinking reaction. If the photoinitiator is substantially insoluble, then it must be finely dispersed in the epoxidized polymer/formulation. A microemulsion of the insoluble photoinitiator works very well. The photoinitiator is used in an amount of from 0.01 to 3% by weight of the total composition, preferably 0.04 to 1%, more preferably 0.1 to 0.3%. Useful photoinitiators include diaryliodonium, alkoxy-substituted diaryliodonium, triarylsulfonium, dialkylphenacylsulfonium, dialkyl-4-hydroxylphenylsulfonium salts. The anions in these salts generally possess low nucleophilic character and include SbF6-, BF4-, PF6-, AsF6-, and B(C6F5) 4-(tetrakis (pentafluoro-phenyl)borate). Useful photoinitiators for emulsification include the following triarylsulfonium hexafluoroantimonate salts: CYRACURE® UVI-6974 (mixed triaryl type) available from Union Carbide, UVE-1014 (mixed triaryl type) available from Von Roll Isola, ADEKA OPTIMER™ SP-170 from Asahi Denka Kogyo K.K., and SARCAT® CD1010 from Sartomer. The following arylsulfonium hexafluorophosphate salts also are suitable for emulsification, although they are not as desirable because of their slower cure. CYRACURE® UVI6990 from Union Carbide, UVE-1016 from Von Roll Isola, ADEKA OPTIMER™ SP-150 from Asahi Denka Kogyo K.K., and SARCAT® CD1011 from Sartomer. Some of the soluble iodonium photoinitiators include SARCAT® CD-1012 from Sartomer, RHODORSIL® R-2074 from Rhodia, (4-octyloxyphenyl)-phenyl-iodonium hexafluoroantimonate or phosphate, and (4-decyloxyphenyl)-phenyl-iodonium hexafluoroantimonate or phosphate.

The onium salts can be used alone or in conjunction with a photosensitizer to respond to long wavelength UV and visible light. Examples of photosensitizers include thioxanthone, anthracene, perylene, phenothiazione, 1,2-benzathracene coronene, pyrene and tetracene. The dispersion/emulsions of the present invention may contain up to 40% by weight and more of the photoinitiator.

Other useful photoinitiators include those described in U.S. Patent No. 5,079,378 which is herein incorporated by reference. These photoinitiators may be described as diaryl, preferably diaryliodonium, salts characterized by the general formula: 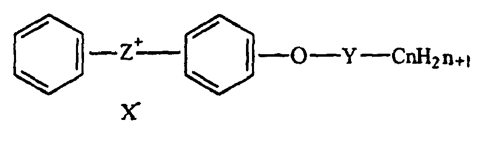
where Y is 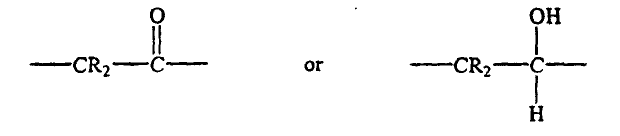 and where R is hydrogen, aryl, alkyl, or an alkylhalide; n is an integer of at least 1, Z is I, Cl, or Br, preferably I, and X is a complex metal halide anion or a complex halide anion of a strong protonic acid. Included are complex metal halide anions such as BF₄⁻, PF₆⁻, AsF₆⁻, SbF₆⁻, as well as anions of strong protonic acids such as ClO₄⁻, CF₃SO₃⁻, FSO₃⁻, CH₃SO₃⁻, and C₄F₉SO₃⁻. Especially useful is another similar compound, CD-1012 supplied by the Sartomer Company. This is a diaryliodonium hexafluoroantimonate and has the formula:

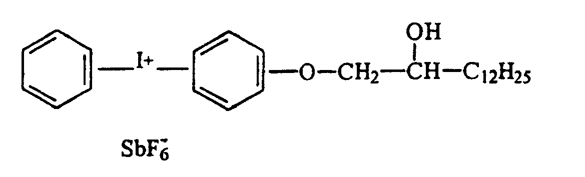

It is common practice to add an adhesion promoting or tackifying resin that is compatible with the polymers. As used herein, the term "tackifier" means any of several hydrocarbon based compositions useful to impart tack to the hot melt adhesive composition. For instance, several classes of tackifiers include aliphatic C₅ resins, polyterpene resins, hydrogenated resins, mixed aliphatic-aromatic resins, rosin esters, and hydrogenated rosin esters.

Exemplary tackifying resins useful herein include aliphatic, cycloaliphatic and aromatic hydrocarbons and modified hydrocarbons and hydrogenated versions; terpenes and modified terpenes and hydrogenated versions; and rosins and rosin derivatives and hydrogenated versions; and mixtures thereof. These tackifying resins have a ring and ball softening point from 70°C to 150°C, and will typically have a viscosity at 350°F (177°C), as measured using a Brookfield viscometer, of no more than 2,000 centipoises (20 grams/cm·second). They are also available with differing levels of hydrogenation, or saturation, which is another commonly used term. Useful examples include EASTOTAC® H-100, H-115 and H-130 from Eastman Chemical Co. in Kingsport, Tennessee, which are partially hydrogenated cycloaliphatic petroleum hydrocarbon resins with softening points of 100°C, 115°C and 130°C, respectively. These are available in the E grade, the R grade, the L grade and the W grade, indicating differing levels of hydrogenation with E being the least hydrogenated and W being the most hydrogenated. The E grade has a bromine number of 15, the R grade a bromine number of 5, the L grade a bromine number of 3 and the W grade has a bromine number of 1. EASTOTAC® H-142R from Eastman Chemical Co. has a softening point of about 140°C. Other useful tackifying resins include ESCOREZ® 5300 and 5400, partially hydrogenated cycloaliphatic petroleum hydrocarbon resins, and ESCOREZ® 5300 and 5400, partially hydrogenated cycloaliphatic petroleum hydrocarbon resins, and ESCOREZ® 5600, a partially hydrogenated aromatic modified petroleum hydrocarbon resin all available from Exxon Chemical Co. in Houston, TX; WINGTACK® Extra which is an aliphatic, aromatic petroleum hydrocarbon resin available from Goodyear Chemical Co. in Akron, OH; HERCOLITE® 2100, a partially hydrogenated cycloaliphatic petroleum hydrocarbon resin available from Hercules, Inc. in Wilmington, DE; and ZONATAC™ 105 and 501 Lite, which are styrenated terpene resins made from d-limonene and available from Arizona Chemical Co. in Panama City, FL.

There are numerous types of rosins and modified rosins available with differing levels of hydrogenation including gum rosins, wood rosins, tall-oil rosins, distilled rosins, dimerized rosins and polymerized rosins. Some specific modified rosins include glycerol and pentaerythritol esters of wood rosins and tall-oil rosins. Commercially available grades include, but are not limited to, SYLVATAC® 1103, a pentaerythritol rosin ester available from Arizona Chemical Co., UNITAC™ R-100 Lite, a pentaerythritol rosin ester from Union Camp in Wayne, NJ, PERMALYN® 305, a erythritol modified wood rosin available from Hercules and FORAL® 105 which is a highly hydrogenated pentaerythritol rosin ester also available from Hercules. SYLVATAC® R-85 and 295 are 85°C and 95°C melt point rosin acids available from Arizona Chemical Co. and FORAL® AX is a 70°C melt point hydrogenated rosin acid available from Hercules, Inc. NIREZ® V-2040 is a phenolic modified terpene resin available from Arizona Chemical Co.

Another exemplary tackifier, PICCOTAC® 115, has a viscosity at 350°F (177°C) of about 1,600 centipoises (16 grams/cm·second)). Other typical tackifiers have viscosities at 350°F (177°C) of much less than 1,600 centipoises (16 grams/(cm·second)), for instance, from 50 to 300 centipoise (0.5 to 3 grams/(cm·second)).

Exemplary aliphatic resins include those available under the trade designations ESCOREZ®, PICCOTAC®, MERCURES™, WINGTACK®, HI-REZ™, QUINTONE®, TACKIROL™, etc. Exemplary polyterpene resins include those available under the trade designations NIREZ®, PICCOLYTE®, WINGTACK®, ZONAREZ™, etc. Exemplary hydrogenated resins include those available under the trade designations ESCOREZ®, ARKON®, CLEARON™, etc. Exemplary mixed aliphatic-aromatic resins include those available under the trade designations ESCOREZ®, REGALITE®, HERCURES™, AR™, IMPREZ™, NORSOLENE®, MARUKAREZ™, ARKON®, QUINTONE®, etc. Other tackifiers may be employed, provided they are compatible with the homogeneous linear or substantially linear ethylene/α-olefin interpolymer.

Aromatic resins may also be employed as tackifying agents, provided that they are compatible with the particular polymers used in the formulation. Useful resins include coumarone-indene resins, polystyrene resins, vinyl toluene-alpha methylstyrene copolymers and polyindene resins. Generally, the amount of aromatic resin used is limited because of the need to have the base formulation (formulation without photoinitiator) transparent to UV light. Electron beam cure mitigates this.

Generally, any tackifying resin can be used that is compatible with the polymers used in the formulation. Choice of resin can affect the compatibility of the polymers with each other as the resin can act or not act as a compatiblizer for the polymers. Often the formulation is or appears homogeneous at elevated temperatures, but when it cools and sets for an extended time the components may phase separate or bleed out. Choice of tackifying resin should affect this in one direction or the other. Some controlled amount of phase separation can produce some beneficial properties. Generally, the adhesives and coatings are applied warm/hot and are cured while the temperature is still above the reported melting range of the crystal regions of the interpolymer, as measured by DSC on the neat interpolymer. It is believed that when the formulations are above the reported melting point or range, the formulations are more compatible and that UV cure locks the compositions in place, keeping any phase separation on a micro rather than a macro scale. Curing at temperatures below the reported melting point is also possible.

Optional components of the present invention are stabilizers which inhibit or retard heat degradation, oxidation, skin formation and color formation. Stabilizers are typically added to the commercially available compounds in order to protect the polymers against heat degradation and oxidation during the preparation, use and high temperature storage of the composition.

### EXAMPLES

The following examples are provided to illustrate the present invention. The examples are not intended to limit the scope of the present invention and they should not be so interpreted. Amounts are in weight parts or weight percentages unless otherwise indicated.

Two different types of metallocene interpolymers were tested, ethylene-butene-1 copolymers and ethylene/octene-1 copolymers. The table below shows the properties of these polymers. Mₙ is the number average molecular weight, M_{w} is the weight average molecular weight, M_{w}/Mₙ is a measure of the polydispersity, and MFI is the melt flow index expressed in dg/min at 190°C/2.16kg reported by the supplier. The crystalline melting point is measured by DSC as reported by the manufacturer, or estimated based on general information from the manufacturers' literature.

| Polymer | Grade | Co-monomer | density g/cm³ | MFI dg/min | Melting temperature, °C | Mₙ | M_{w} | M_{w}/Mₙ |
|---|---|---|---|---|---|---|---|---|
| 1 | Engage 8400 | octene | 0.867- 00.873 | 30 | About 50 | 39,930 | 82, 881 | 2.076 |
| | | | | | | | | |
| 2 | Exact 4049 | butene | 0.873 | 45 | 55 | 57,005 | 122,743 | 2.153 |
| | | | | | | | | |
| 5 | Exact 0201 | octene | 0.902 | 1.1 | About 89 | | | |
| | | | | | | | | |
| 6 | Exact 0203 | octene | 0.902 | 3.0 | About 89 | | | |
| | | | | | | | | |
| 7 | Exact 8201 | octene | 0.882 | 1.1 | 67 | | | |
| | | | | | | | | |
| 8 | Exact 2M055 | octene | 0.882 | 3 | About 67 | | | |
| | | | | | | | | |
| 9 | Engage 8150 | octene | 0.865- 0.871 | 0.5 | About 50 | | | |
| | | | | | | | | |
| 10 | Engage 8200 | octene | 0.867- 0.873 | 5 | About 50 | | | |

Polymer 1 is ENGAGE 8400 and Polymer 2 is EXACT 4049. Polymer 3 is an epoxidized linear monohydroxy diene polymer with a number average molecular weight of 6,000 to 8000. The polymer is a diblock polymer wherein the first block consists of hydrogenated epoxidized polyisoprene and the second block is hydrogenated polybutadiene. The second block has a terminal primary hydroxyl group. The polymer has about 1.7 meq of epoxide functionality per gram and 0.12 meq of hydroxyl groups per gram. Polymer 4 is a linear monohydroxy diene polymer with a number average molecular weight of 3,800 and 0.25 meq per gram of hydroxyl functionality. The mono-ol has a terminal primary hydroxyl group. Polymers 5-10 are EXACT 201, EXACT 203, EXACT 8201, EXACT 2M055, ENGAGE 8150, and ENGAGE 8200, respectively.

The SAFT (shear adhesion failure temperature) was measured by 1" x 1" MYLAR® film to polished stainless steel lap joint with a 500g weight. SAFT measures the temperature at which the lap shear assembly fails under load. Holding Power (HP) is the time required to pull a standard area (1 in. x 1 in.) of tape from a standard test surface (steel) under a standard load (2 kg), in shear at 2° antipeel (Pressure Sensitive Tape Council Method No. 7). Long times indicate high adhesive strength. 180° peel was determined at 23°C by Pressure Sensitive Tape Council Method No. 1. Large numbers indicate high strength when peeling a test tape from a steel substrate. Polyken probe tack (PPT) was determined by ASTM D-2979 or an equivalent method. Loop tack (LT) was determined using TLMI loop tack tester. High numbers for PPT and LT indicate aggressive tack. Ability to be self-wound without the use of a release support was determined (simulated) by casting the formulation on AKROSIL® F1U release liner, curing it, and folding the composition film on top of itself (two 90 degree bends). If it could be pulled back to its original position (open 180 degrees) with neither section of film, as defined by the crease, pulling off the release liner, it was judged to be self-windable. Tensile properties of the cured composition were measured by removing a film of the composition that was cast on the release liner and cured. The film was cut to about ½ inch wide and pulled by hand over a ruler to determine the % elongation before breaking. The ability to stretch before breaking is an important property for easy removal. Stretching decreases the adhesive bond strength. Other tests employed are explained or used in context.

### Comparative Example 1

The first example serves a counter example. A pressure sensitive adhesive (PSA) formulation was prepared that does not incorporate the interpolymer. The table shows the PSA has very good high performance adhesive properties when attached to a strong MYLAR backing film. However, it has no ability to be removed from a test substrate when it is used as a free film (not attached to a backing film). The free film tears almost immediately instead of stretching and then loses adhesion to a substrate. For instance, an approximately one year old retain free film of the cured adhesive was attached to a glass door. It could not be grabbed at an edge and pulled off. Each attempt pulled or broke off a very small piece, the size of what the fingers can grab. The adhesive had little elongation and could not be stripped in one piece or large section. To remove the adhesive, it had to be scraped or rubbed off little by little.

**Table 1 - Comparative example with poor tear strength and free film removability**

| | |
|---|---|
| Polymer 3 | 22.46 |
| Polymer 4 | 18.66 |
| Regalite R-91 | 54.88 |
| 5% emulsion of UVI-6974 sonified into Polymer 4 | 4.00 |
| sum | 100.00 |
| | |
| Formulation identification | 99-110C |
| Film thickness | 1.5 mil (400 mm) |
| UV cured* | |
| Gel content of binder, % | 83 |
| 180° Peel from stainless steel, 23°C, 30 min dwell, 12in/min, pli (kg/cm) | 4.5 (0.81) |
| 180° Peel from polypropylene,23°C, 30 min dwell, 12in/min (30.5 cm), pli (kg/cm) | 4.8 (0.86) |
| 180° Peel from high density polyethylene,23°C, 30 min dwell, 12in/min (30.5 cm), pli (kg/cm) | 1.9 (0.34) |
| Loop tack, pli (kg/cm) | 1.7 (0.31) |
| Probe tack, g | 140 |
| 23°C Holding Power, 15 min dwell, 1 in² (6.45 cm²), 2Kg, hours | >168 |
| 95°C Holding Power, 15 min dwell, 1 in²(6.45 cm²), 2Kg, hours | >168 |
| SAFT (shear adhesion failure temperature), 1 hr dwell, 1 in² (6.45 cm²), 500g, °C | >204 |
| Elongation of a aged free film, % of original | <50, even tears trying to remove it from release liner, bad tear strength-very low elongation, any free film of this (not attached to a backing film) is unremovable from anything but a very low energy surface, like F1U release liner |

| | |
|---|---|
| * The adhesive was coated onto AKROSIL F1U release liner at 57°-63°C and irradiated at 64°-68°C, using a 600 watt/inch Fusion H UV lamp. Dose was 200mJ/cm². The adhesive film thickness was 1.5 mils. For most testing the films were transferred to 2 mil corona treated MYLAR film. PSA testing was done after waiting at least 5 days from cure. Elongation testing was done one year after cure and so was the attempted removal of a free film from glass. | |

### Example 2

In the second example (see Table 2) six adhesive formulations were prepared and tested using the interpolymer. The formulations were prepared using a Sigma blade mixer. Polymer 2 and the tackifying resin (REGALITE R-91, Hercules) were melt mixed together at about 163°C, then the mono-ol polymer, Polymer 4, was added and mixed in. The epoxidized polymer, Polymer 3 and the photointiator (CYRACURE UVI-6974, Union Carbide) were added and mixed at about 143°C until uniform. The photoinitiator had been previously dispersed in a portion of Polymer 4 using sonication.

Adhesive films were prepared by coating the adhesives onto continuous AKROSIL F1U release liner with a gravity fed slot lab Chemsultants coater. The uncured adhesive/liner was cut into approximately one foot strips. Each strip was reheated for 45 seconds in an 80°C oven and then immediately cured while still hot with a 600 watt/in Fusion "H" UV bulb. Immediately after cure, the adhesive strip was hand laminated to the corona treated side of 2 mil MYLAR film. The films were held for 5 days at constant temperature, 23°C, and relative humidity, 50%, for 5 days before testing was begun. A good balance of peel, tack, and room and high temperature holding power was achieved when the interpolymer (Polymer 2) level was low (15%) and the mono-ol polymer (polymer 4) level was high. As the amount of interpolymer increased further and the mono-ol polymer decreased the room temperature tack properties decreased substantially. SAFT decreased with the higher levels of the interpolymer, but still remained much higher than that of thermoplastic hot melt adhesives or metallocene adhesives based upon the same interpolymer.

**Table 2 - PSA properties using a MYLAR backing film**

| Formulation 99-097 | 1 | 2 | 3A | 3B | 4 | 5 |
|---|---|---|---|---|---|---|
| Polymer 2 | 14.97 | 14.97 | 19.96 | | 24.95 | 24.95 |
| Regalite R-91 | 49.90 | 49.90 | 49.90 | | 49.90 | 49.90 |
| Polymer 4 | 17.47 | 12.48 | 9.98 | | 7.49 | 2.50 |
| Polymer 3 | 13.67 | 18.66 | 16.16 | | 13.67 | 18.66 |
| 5% UVI-6974 in Polymer 3 | 4.00 | 4.00 | 4.00 | | 4.00 | 4.00 |
| Sum | 100.01 | 100.01 | 100.00 | | 100.01 | 100.01 |
| | | | | | | |
| Application temperature, °C | 132 | 132 | 160 | 154 | 174 | 174 |
| Adhesive thickness, mm² | 1.5 | 1.5 | 1.5 | 5.0 | 1.5 | 1.5 |
| UV dose, mJ/cm2 | 200 | 200 | 200 | 200 | 200 | 200 |
| 180° peel from SS (30 min dwell), pli (kg/cm) | 2.9 (0.52) | 3.2 (0.58) | 2.1 (0.34) | 3.3 (0.59) | 2.4 (0.43) | 0.8 (0.14) |
| 180° peel from PP (30 min dwell), pli (kg/cm) | 3.3 (0.59) | 3.4 (0.61) | 0.5 (0.09) | 4.3 (0.77) | 2.1 (0.34) | 0.8 (0.14) |
| 180° peel from HDPE (30 min dwell), pli (kg/cm) | 0.8 (0.14) | 0.5 (0.09) | 0.20 (0.04) | 0.20 (0.04) | 0.07 (0.01) | 0.05 (0.01) |
| Loop tack, pli (kg/cm) | 1.8 (0.32) | 1.1 (0.20) | 0.6 (0.10) | 0.7 (0.13) | 0.2 (0.04) | 0.1 (0.02) |
| Polyken probe tack, g | 110 | 10 | 5 | 20 | 0 | 0 |
| Holding power to SS, 0.5 in² (1.6 cm²), 2Kg, hours | 59.5 | >168 | >168 | >168 | >168 | >168 |
| Holding power to SS, 1 in² (6.45 cm²), 2Kg, hours | >168 | >168 | >168 | >168 | >168 | >168 |
| 95°C holding power to SS, 1 in² (6.45 cm²), 1Kg, hours | >100 | >100 | 9.3 coh | 0.8 coh | 0.2 coh | 0.2 coh |
| 95°C holding power to SS, 1 in² (6.45 cm²), 500g, hours | >100 | >100 | >100 | >100 | >100 | >100 |
| SAFT, 1 in² (6.45 cm²), 500g, °C | 203 coh | >204 | 173 coh | 145 coh | 118 coh | 120 coh |

| | | | | | | |
|---|---|---|---|---|---|---|
| "coh" designates cohesive (substrate) failure. | | | | | | |

The free films of the cured adhesives (those stored between two sheets of Akrosil F1U release liner) were examined about one year later for elongation and other properties, as shown in Table 3. The films had excellent tensile properties and could be easily removed from glass, including adhesive 00-097-1 which had relatively high adhesion to glass. All of the films can be used to give good adhesive strength by heat treating the assembly. The adhesives having the higher interpolymer level and the lower mono-ol polymer levels will not stick to ordinary photocopy paper at room temperature, but will form strong bonds to such paper if pressed against it at 80°C. The same is true for sealing two strips of MYLAR film together. Pressing was done by placing the paper, UV cured adhesive, and 2 mil corona treated MYLAR layers in a Carver press at 80°C, under contact pressure for 2 minutes (to heat), and then pressing at 22 psi for an additional 3 minutes. UV cure adhesive, MYLAR laminates were prepared in the same manner.

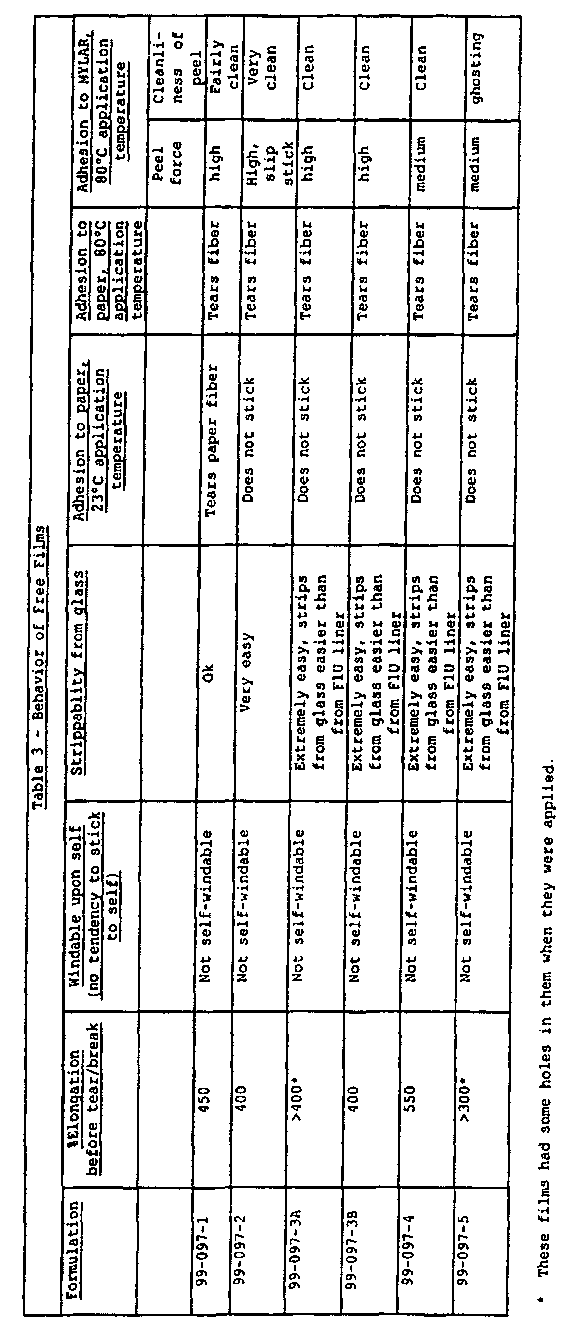

### Example 3

The formulations in example 3 were prepared and tested in a similar fashion to example 2. The formulations and results are given in Table 4. All five of the formulations are examples of the invention.

**Table 4**

| Formulation 99-095- | 1 | 2 | 3A | 3B | 4 | 5 |
|---|---|---|---|---|---|---|
| Polymer 2 | 17.96 | 17.96 | 23.95 | | 29.94 | 29.94 |
| Regalite R-125 | 39.92 | 39.92 | 39.92 | | 39.92 | 39.92 |
| Polymer 4 | 20.96 | 14.97 | 11.98 | | 8.98 | 2.99 |
| Polymer 3 | 17.16 | 23.15 | 20.15 | | 17.16 | 23.15 |
| 5% UVI-6974 in Polymer 3 | 4.00 | 4.00 | 4.00 | | 4.00 | 4.00 |
| sum | 100.00 | 100.00 | 100.00 | | 100.00 | 100.00 |
| | | | | | | |
| Application temperature, °C | 129 | 129 | 149 | 149 | 160 | 168 |
| Adhesive thickness, mm | 1.5 | 1.5 | 1.5 | 1.5 | 1.5 | 1.5 |
| UV dose, mJ/cm2 | 200 | 200 | 200 | 200 | 200 | 200 |
| 180° peel from SS (30 min dwell), pli (Kg/cm) | 0.2 (0.04) | 0.1 (0.02) | 0.06 (0.01) | 0.1 (0.02) | 0.02 (0.004) | 0.02 (0.004) |
| 180° peel from PP (30 min dwell), pli (Kg/cm) | 0.07 (0.01) | 0.09 (0.02) | 0.04 (0.007) | 0.05 (0.01) | 0.01 (0.002) | 0.01 (0.002) |
| 180° peel from HDPE (30 min dwell), pli (Kg/cm) | 0.20 (0.04) | 0.05 (0.01) | 0.02 (0.004) | 0.04 (0.007) | 0.01 (0.002) | 0.01 (0.002) |
| Loop tack, pli (Kg/cm) | 0.2 (0.04) | 0.01 (0.002) | 0.06 (0.01) | 0.1 (0.02) | 0.03 (0.005) | 0.04 (0.007) |
| Polyken probe tack, g | 0 | 0 | 0 | 0 | 0 | 0 |
| Holding power to SS, 0.5 in² (1.6 cm²), 2Kg, hours | >168 | >168 | >168 | >168 | >168 | >168 |
| Holding power to SS, 1 in² (6.45 cm²), 2Kg, hours | >168 | >168 | >168 | >168 | >168 | >168 |
| 95°C holding power to SS, 1 in² (6.45 cm²), 1Kg, hours | >100 | >100 | >100 | .5 coh | .2 coh | .02 coh |
| 95°C holding power to SS, 1 in² (6.45 cm²), 500g, hours | >100 | >100 | >100 | >100 | >100 | >100 |
| SAFT, 1 in² (6.45 cm²), 500g, °C | >204 | >204 | >204 | >204 | 139 coh | <88 coh |

All of these adhesives have very low tack and peel properties at room temperature. They produce free films cling to glass well and are extremely easy to remove, except for 99-095-5 which barely clings to glass. None of the films will stick to paper when applied at room temperature (see Table 5). Most of the adhesives appear suitable for self-winding. Some of the adhesives can be useful if used in a heat activation mode.

**Table 5 - Behavior of free films**

| Formulation | %Elongation before tear/break | Windable upon self | Adhesion to paper, 80°C application temperature | Adhesion to MYLAR, 80°C application temperature | |
|---|---|---|---|---|---|
| | | | | Peel force | Cleanlines s |
| 99-095-1 | 500 | No | Tears fiber | High | Clean |
| 99-095-2 | 400 | No, but close | Barely tears fiber | Light, slip stick | Clean |
| 99-095-3A | 250 | yes | Barely tears fiber | Light | Clean |
| 99-095-3B | 350* | yes | Tears fiber | Light | A little residue |
| 99-095-4 | 500 | yes | Tears fiber | Light | Residue |
| 99-095-5 | >200* | yes | Tears some fiber | Medium, slip stick | clean |

| | | | | | |
|---|---|---|---|---|---|
| * Some holes in the film as cast. | | | | | |

### Example 4

The formulation of Example 4, shown in Table 6, was prepared on a BRABENDER® mixer, using the order of addition shown in the table. These are good quality PSA adhesives.

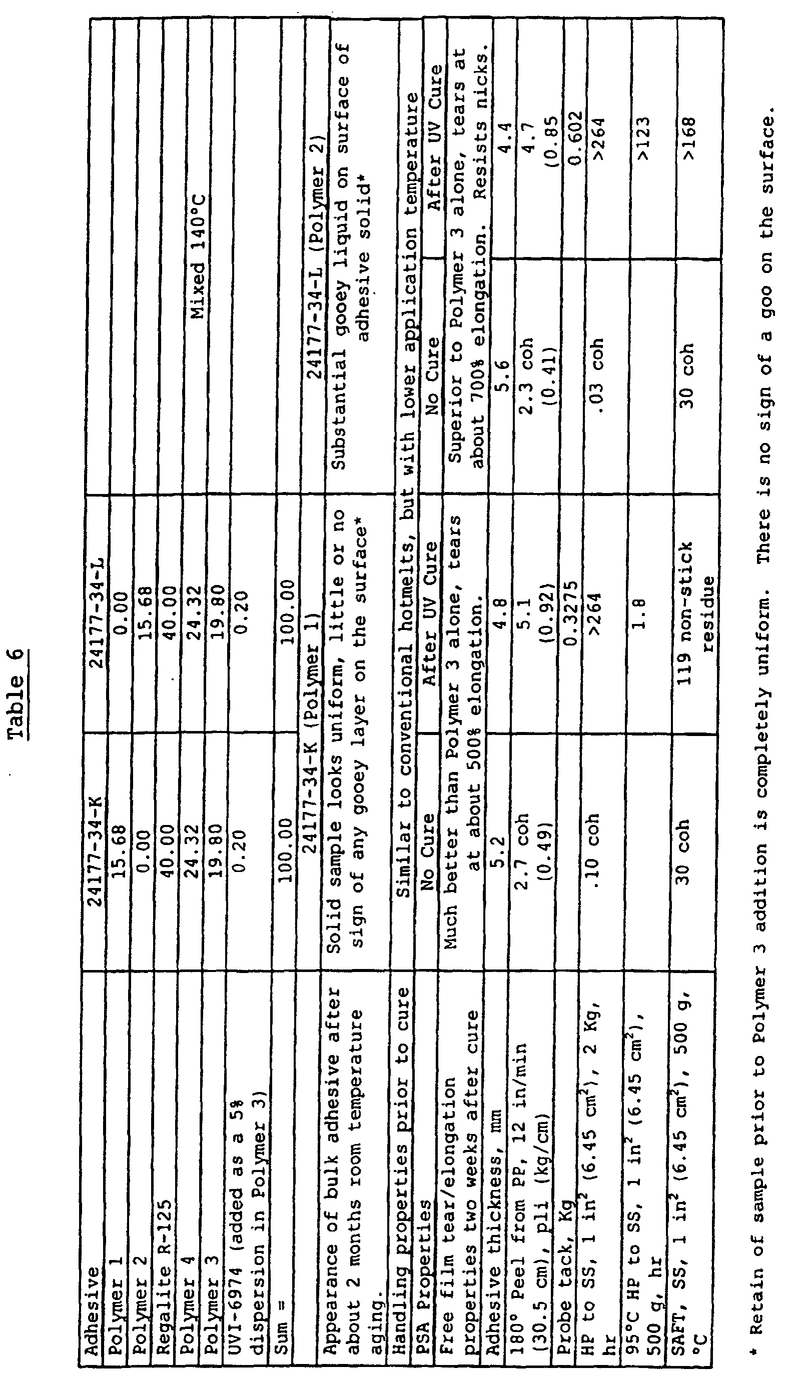

### Example 5

The adhesives of this example show a variety of very useful properties. For instance, adhesive 99-168-8 in Tables 7 and 8 appears to be self-windable, have good cling and removabilty from glass, and is excellent for heat activation.

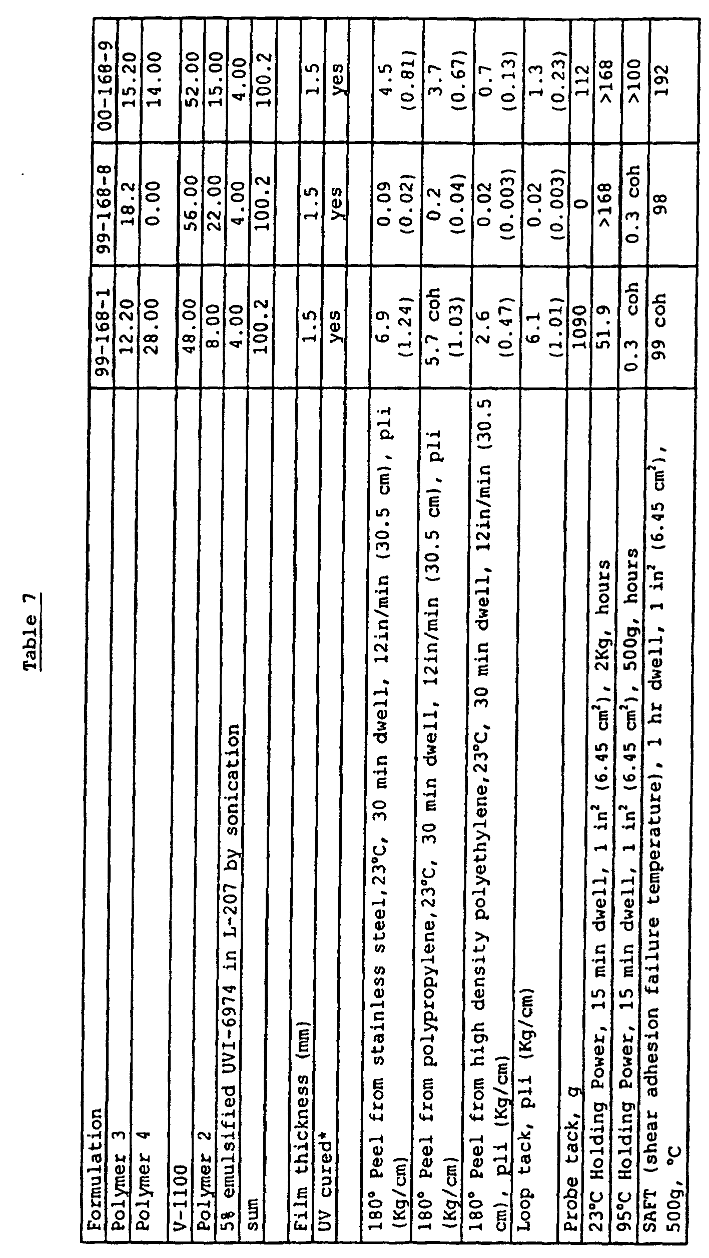

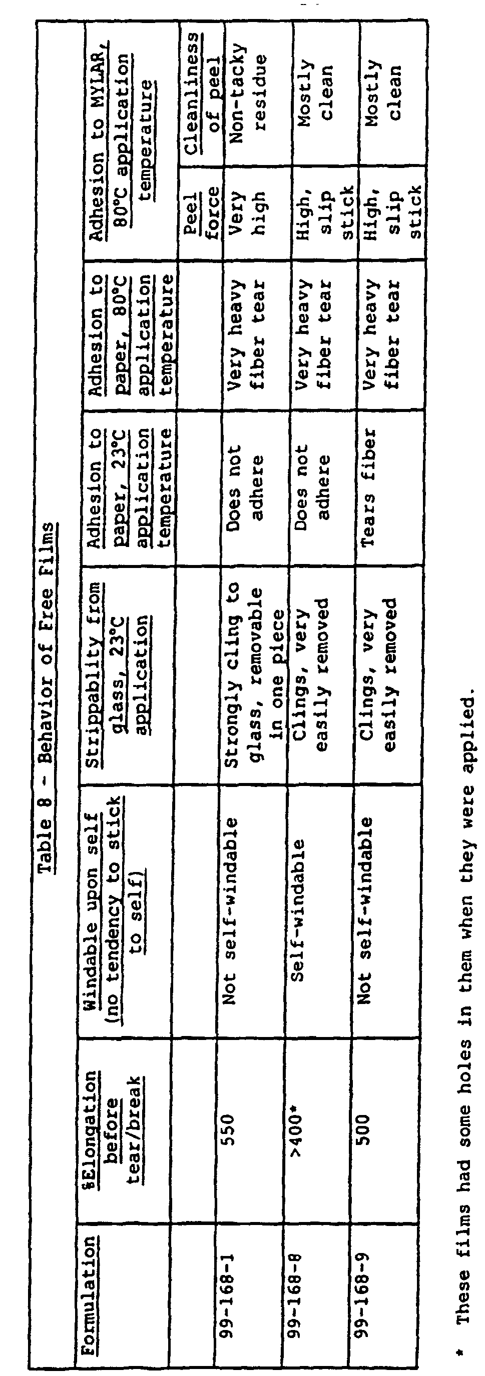

### Example 6

The adhesives of Example 6 were prepared on a BRABENDER mixer using a master batch method: 179 grams of R-91 and 70.5 grams of the metallocene polymer were mixed at 160°C, and some of the mix was removed to leave 139.2 grams of the master batch in the BRABENDER mixer. Then 60.8 grams of polymer 4 and 40.0 grams of polymer 3 were added and mixed. The temperature was allowed to drop to 140°C, and the 5% photoinitiator emulusion was added and mixed in for 15 minutes. The batch was then dumped from the BRABENDER mixer onto FIU release liner, and wrapped to minimize UV exposure. The adhesives are solid at room temperature. After one week the adhesives were inspected for any bleed. The results are shown in the table below. Polymer 1 (8400) seems most compatible, of the interpolymers tested, with the rest of the formulation components, as evidenced by little or no bleed out. Polymer 7 (8201) is the least compatible, as judged by the bleed out criteria. To cast the adhesives, small blocks of the adhesive were cut off and placed in Pyrex glass beakers and heated in a oven for 4 hours at 130°C. The formulations containing polymers 5, 6, and 7 would not flow and appeared gelled. From this behavior they were judged to be unsuitable (perhaps because of incompatiblity) for use with the liquid polymers (polymers 3 and 4). Polymer 7 and 8 are different only in melt index. Polymer 8 is lower molecular weight (higher melt index) than Polymer 7. The fact that polymer 8 behaved so much better than polymer 7, indicates that at a density of about 0.882 the interpolymer is incompatible if the molecular weight is too high, but usable if the molecular weight is reduced. The three PSA formulations that could be coated and cured showed many excellent high performance properties.

**Table 9 - Screening interpolymers in PSA's coated on MYLAR film**

| Formulation | 24177-1 | 24177-2 | 24177-3* | 24177-4* | 24177-5* | 24177-6 |
|---|---|---|---|---|---|---|
| Polymer 1 | 15.68 | 0 | 0 | 0 | 0 | 0 |
| Polymer 2 | 0 | 15.68 | 0 | 0 | 0 | 0 |
| Polymer 5 | 0 | 0 | 15.68 | 0 | 0 | 0 |
| Polymer 6 | 0 | 0 | 0 | 15.68 | 0 | 0 |
| Polymer 7 | 0 | 0 | 0 | 0 | 15.68 | 0 |
| Polymer 8 | 0 | 0 | 0 | 0 | 0 | 15.68 |
| Regalite R-125 | 40 | 40 | 40 | 40 | 40 | 40 |
| Polymer 4 | 24.32 | 24.32 | 24.32 | 24.32 | 24.32 | 24.32 |
| Polymer 3 | 16.00 | 16.00 | 16.00 | 16.00 | 16.00 | 16.00 |
| 5% emulsion of UVI-6974 in polymer 3 | 4.00 | 4.00 | 4.00 | 4.00 | 4.00 | 4.00 |
| Sum | 100.00 | 100.00 | 100.00 | 100.00 | 100.00 | 100.00 |
| Bleed from solid samples to release liner, after 1 week at room temperature Ranking, from best (least bleed out) to worst: Engage 8400»Exact 0201>Exact 0203>Exact 2M055>Exact 4049»Exact 8201 | Very little evidence of any bleed out | Bleed out around edges of sample | slightly less bleed out compared to 24177-2 | slightly less bleed out compared to 24177-2 | Heavy bleed out, liquid residue all over sample and liner | slightly less bleed out compared to 24177-2 |
| Ability to hand cast at 130°C | good | good | Gelled, could not cast film | Gelled, could not cast film | Gelled, could not cast film | good |
| 0V cure, single Fusion H bulb, 300 watt/in, 200 mJ/cm2 | yes | yes | | | | yes |
| Film temperature when 0V cured, °C | 80 | 80 | | | | 80 |
| 180° Peel from stainless steel,23°C, 30 min dwell, 12in/min (30.5 c,), pli (Kg/cm) | 6.7 (1.21) | 6.1 (1.01) | | | | 5.5 (0.99) |
| Loop tack, pli (Kg/cm) | 0.5 | 1.2 | | | | 3.0 (0.54) |
| Probe tack, g | 794 | 866 | | | | 1102 |
| 23°C Holding Power, 1 in² (6.45 cm²), 2Kg, hours | >167 | >167 | | | | >167 |
| 95°C Holding Power, 15 min dwell, 1 in² (6.45 cm²), 500g, hours | 0.5 | >33 | | | | >33 |
| SAFT (shear adhesion failure temperature), 1 in² (6.45 cm²), 500g, °C | 95 | >160 | | | | >160 |

| | | | | | | |
|---|---|---|---|---|---|---|
| * Not an example of the present invention | | | | | | |

### Example 7

The adhesives of Example 7 were prepared on a BRABENDER mixer using a master batch method: 179 grams of Regalite R-91 and 70.5 grams of the metallocene polymer were mixed at 160°C, and some of the mix was removed to leave 139.2 grams of the master batch in the BRABENDER mixer. Then 60.8 grams of polymer 4, 40.0 grams of polymer 3 were added and mixed. The temperature was allowed to drop to 140°C, and the 5% photoinitiator emulusion was added and mixed in for 15 minutes. The batch was then dumped from the BRABENDER mixer onto FIU release liner, and wrapped to minimize UV exposure. The adhesives are solid at room temperature. To cast the adhesives, small blocks of the adhesive were cut off and placed in glass beakers, heated in an oven for 4 hours at 130°C, hand mixed, coated onto F1U release liner at a about 2 to 3 mil thickness, and then UV cured at a adhesive temperature of 80°C. The films were covered with a second piece of release liner and stored for one year at room temperature, and tested

**Table 10 - Screening of interpolymers**

| Formulation | 24177-73-1 | 24177-73-3 | 24177-73-4 |
|---|---|---|---|
| Polymer 1 | 15.68 | 0 | 0 |
| Polymer 9 | 0 | 15.68 | 0 |
| Polymer 10 | 0 | 0 | 15.68 |
| Regalite R-125 | 40 | 40 | 40 |
| Polymer 4 | 24.32 | 24.32 | 24.32 |
| Polymer 3 | 16.00 | 16.00 | 16.00 |
| 5% emulsion of UVI-6974 in polymer 3 | 4.00 | 4.00 | 4.00 |
| Sum | 100.00 | 100.00 | 100.00 |
| | | | |
| UV cure, single Fusion H bulb, 300 watt/in, 200 mJ/cm2 | yes | yes | yes |
| Film temperature when UV cured, °C | 80 | 80 | 80 |
| Film appearance | Clear, uniform | Clear, uniform | Clear, uniform |
| Elongation, % | 400 | 400 | 550 |
| Ability to wind on self | no | no | no |
| Adhesion and strippablity from glass | Clings and strips well | Clings and strips well | Clings and strips well |
| Adhesion to paper at room temperature | Light adhesion, strip easily with no fiber pull | No adhesion | No adhesion |
| Adhesion to paper after 80°C contact | Extreme fiber tear - splits paper | Adheres strongly to paper, pulls film cleanly from MYLAR | Extreme fiber tear - splits paper |
| Adhesion to MYLAR after 80°C contact | Very high, coh failure mode | Very high, clean removal | Very high, coh failure mode |

## Claims

1. A formulation for curable strippable adhesive and coating films comprising:
(a)from 10 to 90 percent by weight of a crosslinkable epoxidized diene polymer,
(b) from 0 to 70 percent by weight of a diene mono-ol polymer not to exceed three times the weight of the epoxidized polymer,
(c) from 5 to 50 percent by weight of a homogeneous linear or substantially linear interpolymer of ethylene and at least one C₃-C₂₀ alpha olefin having a resultant polymer density from 0.85 to 0.89 grams per cubic centimeter,
(d)from 0 to 65% percent by weight of a tackifying resin, and
(e)from 0.01 to 3 percent by weight of a photoinitiator.

2. The formulation of Claim 1 wherein the epoxidized diene polymer is a monohydroxylated polydiene polymer having the general formula:
(HO)ₓ-A-S_{z}-B-(OH)_{y}
wherein A and B are polymer blocks which may be homopolymer blocks of conjugated diolefin monomers, copolymer blocks of conjugated diolefin monomers, or copolymer blocks of diolefin monomers and monoalkenyl aromatic hydrocarbon monomers; and
wherein the A blocks have a greater concentration of more highly substituted aliphatic double bonds than the B blocks have; and
wherein the A blocks have a number average molecular weight of from 100 to 6,000 and the B blocks have a number average molecular weight of from 1,000 to 15,000; and
wherein S is a vinyl aromatic hydrocarbon block having a number average molecular weight of from 100 to 10,000; and
wherein x and y are 0 or 1 and either x or y must be 1 but only one at a time can be 1; and wherein z is 0 or 1.

3. The formulation of Claim 2 wherein the epoxidized polydiene polymer contains at least 0.1 miliequivalents of epoxide functionality per gram of polymer.

4. The formulation of Claim 2 wherein the epoxidized polydiene polymer contains up to 7.0 miliequivalents of epoxide functionality per gram of polymer.

5. The formulation of Claim 1 wherein the interpolymer has a density from 0.86 to 0.88 and a melt index of 0.3 to 100 dg/min at 190°C/2.16kg.

6. The formulation of Claim 1 which contains no more than 10 percent by weight of the mono-ol polymer and is self-windable.

7. A formulation for high performance tape and label pressure sensitive adhesives which comprises:
(a)from 15 to 25 percent by weight of a crosslinkable epoxidized diene polymer,
(b) from 15 to 30 percent by weight of a diene mono-ol polymer not to exceed three times the weight of the epoxidized polymer,
(c)from 5 to 20 percent by weight of a homogeneous linear or substantially linear interpolymer of ethylene and at least one C₃-C₂₀ alpha olefin having a resultant polymer density from 0.85 to 0.89 grams per cubic centimeter,
(d) from 40 to 65% percent by weight of a tackifying resin, and
(e)from 0.01 to 3 percent by weight of a photoinitiator.

8. The formulation of Claim 7 wherein the epoxidized diene polymer is a monohydroxylated polydiene polymer having the general formula:
(HO)ₓ-A-S_{z}-B- (OH)_{y}
wherein A and B are polymer blocks which may be homopolymer blocks of conjugated diolefin monomers, copolymer blocks of conjugated diolefin monomers, or copolymer blocks of diolefin monomers and monoalkenyl aromatic hydrocarbon monomers; and
wherein the A blocks have a greater concentration of more highly substituted aliphatic double bonds than the B blocks have; and wherein the A blocks have a number average molecular weight of from 100 to 6,000 and the B blocks have a number average molecular weight of from 1,000 to 15,000; and
wherein S is a vinyl aromatic hydrocarbon block having a number average molecular weight of from 100 to 10,000; and
wherein x and y are 0 or 1 and either x or y must be 1 but only one at a time can be 1; and wherein z is 0 or 1.

9. The formulation of Claim 8 wherein the epoxidized polydiene polymer contains at least 0.1 miliequivalents of epoxide functionality per gram of polymer.

10. The formulation of Claim 8 wherein the epoxidized polydiene polymer contains up to 7.0 miliequivalents of epoxide functionality per gram of polymer.

11. The formulation of Claim 7 wherein the interpolymer has a density from 0.86 to 0.88 and a melt index of 0.3 to 100 dg/min at 190°C/2.16kg.

## Revendications

1. Formulation pour films adhésifs et films de revêtement durcissables pelables comprenant :
(a) 10 à 90 pour-cent en poids d'un polymère de diène époxydé réticulable,
(b) 0 à 70 pour-cent en poids d'un polymère de mono-ol de diène afin de ne pas dépasser trois fois le poids du polymère époxydé,
(c) 5 à 50 pour-cent en poids d'un interpolymère homogène linéaire ou sensiblement linéaire d'éthylène et d'au moins une alpha-oléfine en C₃ à C₂₀, ayant une masse volumique spécifique du polymère obtenu de 0,85 à 0,89 gramme par centimètre cube, de 10 à 90 pour-cent en poids d'un polymère de diène réticulable époxydé,
(d) 0 à 65% pour-cent en poids d'une résine adhésivante, et
(e) 0,01 à 3 pour-cent en poids d'un photoinitiateur.

2. Formulation selon la revendication 1, dans laquelle le polymère de diène époxydé est un polymère de polydiène monohydroxylé ayant la formule générale :
(HO)ₓ-A-S_{z}-B-(OH)_{y}
dans laquelle A et B sont des séquences polymères qui peuvent être des séquences homopolymères de monomères de dioléfines conjugués, des séquences copolymères de monomères de dioléfines conjugués ou des séquences copolymères de monomères de dioléfines et de monomères d'hydrocarbures monoalcénylaromatiques; et
dans laquelle les séquences A ont une plus grande concentration de doubles liaisons aliphatiques plus fortement substituées que les séquences B; et
dans laquelle les séquences A ont un poids moléculaire moyen en nombre de 100 à 6000 et les séquences B ont un poids moléculaire moyen en nombre de 1000 à 15.000; et
dans laquelle S est une séquence d'hydrocarbure vinylaromatique ayant un poids moléculaire moyen en nombre de 100 à 10.000; et dans laquelle x et y sont 0 ou 1 et x ou y doit être 1, mais un seul à la fois peut être 1; et dans laquelle z est 0 ou 1.

3. Formulation selon la revendication 2, dans laquelle le polymère de polydiène époxydé contient au moins 0,1 milliéquivalent de fonctionnalité époxyde par gramme de polymère.

4. Formulation selon la revendication 2, dans laquelle le polymère de polydiène époxydé contient jusqu'à 7,0 milliéquivalents de fonctionnalité époxyde par gramme de polymère.

5. Formulation selon la revendication 1, dans laquelle l'interpolymère a une masse volumique spécifique de 0,86 à 0,88 et un indice de fusion de 0,3 à 100 dg/mn à 190°C/2,16 kg.

6. Formulation selon la revendication 1, qui ne contient pas plus de 10 pour-cent en poids de polymère de mono-ol et est auto-enroulante.

7. Formulation pour adhésifs sensibles à la pression pour rubans et étiquettes de hautes performances, qui comprend :
(a) 15 à 25 pour-cent en poids d'un polymère de diène époxydé réticulable,
(b) 15 à 30 pour-cent en poids d'un polymère de mono-ol de diène afin de ne pas dépasser trois fois le poids du polymère époxydé,
(c) 5 à 20 pour-cent en poids d'un interpolymère homogène linéaire ou sensiblement linéaire d'éthylène et d'au moins une alpha-oléfine en C₃ à C₂₀ ayant une masse volumique spécifique de polymère obtenue de 0,85 à 0,89 gramme par centimètre cube,
(d) 40 à 65% pour-cent en poids d'une résine adhésivante, et
(e) 0,01 à 3 pour-cent en poids d'un photoinitiateur.

8. Formulation selon la revendication 7, dans laquelle le polymère de diène époxydé est un polymère de polydiène monohydroxylé ayant la formule générale :
(HO)ₓ-A-S_{z}-B-(OH)_{y}
dans laquelle A et B sont des séquences polymères qui peuvent être des séquences homopolymères de monomères de dioléfines conjugués, des séquences copolymères de monomères de dioléfines conjugués ou des séquences copolymères de monomères de dioléfines et de monomères d'hydrocarbures monoalcénylaromatiques; et
dans laquelle les séquences A ont une concentration plus grande en doubles liaisons aliphatiques plus fortement substituées que les séquences B et dans laquelle les séquences A ont un poids moléculaire moyen en nombre de 100 à 6000 et les séquences B ont un poids moléculaire moyen en nombre de 1000 à 15.000; et
dans laquelle S est une séquence d'hydrocarbure vinylaromatique ayant un poids moléculaire moyen en nombre de 100 à 10.000; et dans laquelle x et y sont 0 ou 1 et x ou y doit être 1, mais un seul à la fois peut être 1; et dans laquelle z est 0 ou 1.

9. Formulation selon la revendication 8, dans laquelle le polymère de polydiène époxydé contient au moins 0,1 milliéquivalent de fonctionnalité époxyde par gramme de polymère.

10. Formulation selon la revendication 8, dans laquelle le polymère de polydiène époxydé contient jusqu'à 7,0 milliéquivalents de fonctionnalité époxyde par gramme de polymère.

11. Formulation selon la revendication 7, dans laquelle l'interpolymère a une masse volumique spécifique de 0,86 à 0,88 et un indice de fusion de 0,3 à 100 dg/mn à 190°C/2,16 kg.

## Patentansprüche

1. Formulierung für abziehbare Klebstoff- und Beschichtungsfolien, umfassend:
a) von 10 bis 90 Gewichtsprozent eines quervernetzbaren epoxidierten Dien-Polymers,
b) von 0 bis 70 Gewichtsprozent eines Dien-mono-ol-Polymers, das das Gewicht des epoxidierten Polymers nicht um das Dreifache übersteigt,
c) von 5 bis 50 Gewichtsprozent eines homogenen linearen oder im Wesentlichen linearen Mischpolymerisats aus Ethylen und wenigstens einem C₃-C₂₀ Alphaolefin, das eine resultierende Polymerdichte von 0,85 bis 0,89 Gramm pro Kubikzentimeter aufweist,
d) von 0 bis 65 Gewichtsprozent eines Harzes zur Erhöhung der Klebrigkeit, und
e) von 0,01 bis 3 Gewichtsprozent eines Photoinitiators.

2. Formulierung nach Anspruch 1, worin das epoxidierte Dien-Polymer ein monohydroxyliertes Polydien-Polymer ist, das die allgemeine Formel:
(HO)ₓ-A-S_{z}-B-(OH)_{y}
worin A und B Polymerblöcke sind, die Homopolymerblöcke von konjugierten Diolefinmonomeren, Copolymerblöcke von konjugierten Diolefinmonomeren oder Copolymerblöcke von Diolefinmonomeren und monoalkenylaromatischen Kohlenwasserstoffmonomeren sind; und
worin die A-Blöcke eine größere Konzentration an höhersubstituierten aliphatischen Doppelbindungen als die B-Blöcke aufweisen; und
worin die A-Blöcke ein Molekulargewicht Zahlenmittel von 100 bis 6.000 aufweisen und die B-Blöcke ein Molekulargewicht Zahlenmittel von 1.000 bis 15.000; und worin S ein vinylaromatischer Kohlenwasserstoffblock ist, der ein Molekulargewicht Zahlenmittel von 100 bis 10.000 aufweist; und worin x und y 0 oder 1 sind und entweder x oder y müssen 1 sein, aber nur eines kann gleichzeitig 1 sein; und worin z 0 oder 1 ist.

3. Formulierung nach Anspruch 2, worin das epoxidierte Polydien-Polymer wenigstens 0,1 Milliäquivalente an Epoxidfunktionalität pro Gramm Polymer aufweist.

4. Formulierung nach Anspruch 2, worin das epoxidierte Polydien-Polymer bis zu 7,0 Milliäquivalente an Epoxidfunktionalität pro Gramm Polymer enthält.

5. Formulierung nach Anspruch 1, worin das Mischpolymerisat eine Dichte von 0,86 bis 0,88 und einen Schmelzindex von 0,3 bis 100 dg/min bei 190°C/2,16 kg aufweist.

6. Formulierung nach Anspruch 1, die nicht mehr als 10 Gewichtsprozent des Mono-ol-Polymers enthält und selbstaufwickelbar ist.

7. Formulierung für druckempfindliche Hochleistungsklebemittel und Etiketten, die umfasst:
a) von 15 bis 25 Gewichtsprozent eines quervernetzbaren epoxidierten Dien-Polymers,
b) von 15 bis 30 Gewichtsprozent eines Dienmono-ol-Polymers, das das Gewicht des epoxidierten Polymers nicht um das dreifache übersteigt,
c) von 5 bis 20 Gewichtsprozent eines homogenen linearen oder im Wesentlichen linearen Mischpolymerisats aus Ethylen und wenigstens einem C₃-C₂₀ Alphaolefin, das eine resultierende Polymerdichte von 0,85 bis 0,89 Gramm pro Kubikzentimeter aufweist,
d) 40 bis 65 Gewichtsprozent eines Gewichtsprozent eines Harzes zur Erhöhung der Klebrigkeit, und
e) von 0,01 bis 3 Gewichtsprozent eines Photoinitiators.

8. Formulierung nach Anspruch 7, worin das epoxidierte Dien-Polymer ein monohydroxyliertes Polydien-Polymer ist, das die allgemeine Formel:
(HO)ₓ-A-S_{z}-B-(OH)_{y}
worin A und B Polymerblöcke sind, die Homopolymerblöcke von konjugierten Diolefinmonomeren, Copolymerblöcke von konjugierten Diolefinmonomeren oder Copolymerblöcke von Diolefinmonomeren und monoalkenylaromatischen Kohlenwasserstoffmonomeren sind; und
worin die A-Blöcke eine größere Konzentration an höhersubstituierten aliphatischen Doppelbindungen als die B-Blöcke aufweisen; und
worin die A-Blöcke ein Molekulargewicht Zahlenmittel von 100 bis 6.000 aufweisen und die B-Blöcke ein Molekulargewicht Zahlenmittel von 1.000 bis 15.000 aufweisen; und worin S ein vinylaromatischer Kohlenwasserstoffblock ist, der ein Molekulargewicht Zahlenmittel von 100 bis 10.000 aufweist; und
worin x und y 0 oder 1 sind und entweder x oder y müssen 1 sein, aber nur eines kann gleichzeitig 1 sein; und worin z 0 oder 1 ist.

9. Formulierung nach Anspruch 8, worin das epoxidierte Polydien-Polymer wenigstes 0,1 Milliäquivalente an Epoxidfunktionalität pro Gramm Polymer enthält.

10. Formulierung nach Anspruch 8, worin das epoxidierte Polydien-Polymer bis zu 7,0 Milliäquivalente an Epoxidfunktionalität pro Gramm Polymer enthält.

11. Formulierung nach Anspruch 7, worin das Mischpolymerisat eine Dichte von 0,86 bis 0,88 und einen Schmelzindex von 0,3 bis 100 dg/min bei 190°C/2,16 kg aufweist.
